# EUROPEAN PATENT APPLICATION

(11) **EP 4 763 682 A1**
(43) Date of publication of application: **24.06.2026**
(21) Application number: 25217102.0
(22) Date of filing: 19.11.2025
(51) Int. Cl.: B62M 6/45, B62M 6/60, B62M 19/00

(54) **CHAINLESS VEHICLE WITH SERIAL HYBRID DRIVE SYSTEM**

(30) Priority: 19.12.2024 NL 2039413
(71) Applicant: Van Raam Mobility B.V., 7051 HT Varsseveld (NL)
(72) Inventor: Zyska, Kevin, 7051 HT Varsseveld (NL)
(74) Representative: Custos IPC Coöperatie U.A.

(57) **Abstract**

A vehicle (1) is described comprising at least two wheels (3,4) and a hybrid drive system (20) for driving at least one of the wheels. The drive system (20) comprises at least one electrical generator (6) comprising a generator axle, a crank drive (11) coupled to the generator axle, and at least one electrical drive motor (7) arranged to drive the at least one of the wheels. An energy storage device (8) is arranged to store electric energy generated by the at least one electrical generator, and to supply energy to the at least one electrical drive motor (7). The drive system also comprises a control system (9) comprising a motor speed measurement unit (23) for measuring a motor speed (n_{Mot}) of the at least one electrical drive motor (7), the control system (9) being arranged to control a speed of the at least one electric generator (6) using a target speed value (n_{Gen_target}) for the generator (6) which depends on the motor speed (n_{Mot}), and using a target current value (I_{Mot_target}) for the motor (7) which depends on a dynamic power input (P_{Gen}) produced by a driver when rotating the crank drive.

## Description

### Field of the invention

The present invention relates to a vehicle comprising at least two wheels, and a hybrid drive system for driving at least one of the wheels. The invention also relates to method of controlling such a vehicle, and to a computer program product.

### Background art

Due to the many innovations in the field of electrical batteries in the last decade, many vehicles use, next to their usual power source, an electrical power source. These so-called hybrid vehicles are driven using a hybrid drive system in order to reduce the CO₂ footprint and/or to provide for more comfort. A hybrid drive system consists of at least two power sources. In a hybrid car, for example, an electric motor and an internal combustion engine are provided. In an e-bike, it is the human being via the crank drive and an electric motor. There are also different hybrid structures: parallel hybrids, serial hybrids, power-split hybrids and mixtures of these. In parallel hybrids, the two (or more) power sources act in parallel on the vehicle's downforce, as the name implies. In serial hybrids, on the other hand, the power sources are connected in series (as the name implies). In this case, this means that the human being first acts on a generator with his mechanical input. This causes the generator to generate electrical power, which is then converted back into mechanical power at the output by the electrical motor.

Today's pedal-crank-driven vehicles that are equipped with a serial hybrid drive system often do not generate the desired driving behaviour. Ideally this should be similar to that of a vehicle with a classic, mechanical drive train with chains/belts, so that the pedal can be statically loaded with force, for example. In the past, several attempts were made to come to chainless pedelec that behaves like a classical bike with chains to transfer the power of the driver to the wheels. However, due to the pedal crank dynamics and the resulting oscillating torques on the part of the driver, the dynamic adjustment of the generator braking torque is not trivial, and until now, no optimal drive system has been found.

### Summary of the invention

The aim of the present invention is to provide a pedal-crank-driven vehicle that is equipped with a serial hybrid drive system which offers an improved driving experience for the driver as compared to the known hybrid vehicles.

According to a first aspect of the present invention, there is provided a vehicle, such as a bicycle or tricycle, comprising at least two wheels and a hybrid drive system for driving at least one of the wheels. The hybrid drive system comprises at least one electrical generator comprising a generator axle, a pedal crank drive coupled to the generator axle, and at least one electrical drive motor arranged to drive the at least one of the wheels. The hybrid drive system further comprises an energy storage device arranged to store electric energy generated by the at least one electrical generator, and to supply energy to the at least one electrical drive motor. The drive system also comprises a control system comprising a motor speed measurement unit for measuring a motor speed of the at least one electrical drive motor. The control system is arranged to control a speed of the at least one electric generator using a target speed value for the generator which depends on the motor speed, and arranged to control a current of the electrical drive motor using a target current value for the motor which depends on a dynamic power input produced by a driver when rotating the pedal crank drive.

By converting the vehicle speed to a target speed on the generator, a variety of solutions can be pursued, such as imitating a mechanical manual transmission with freely variable gear ratios and gears that are switched manually or automatically, CVT-like transmission functions with continuously variable gear ratio adjustment or completely specific profiles based on the speed. Furthermore, the feedback between the vehicle speed and the speed control on the generator gives the driver physical feedback regarding his mechanical influence on the overall system. Ultimately, it will feel to him as if there is a mechanical connection between the crank drive and the drive. The behaviour of such a software-simulated mechanical connection can be completely customized.

In an embodiment the control system comprises a generator current measurement unit for measuring a generator current of the at least one generator, and a generator speed measurement unit for measuring a generator speed of the generator wherein the control system is arranged to determine the dynamic power input produced by the driver using the generator current and the generator speed.

In an embodiment, the generator speed measurement unit may be arranged to determine both the angular speed as well as the angle of a rotor of the generator.

In an embodiment, the control system further comprises:
- a generator target current calculator arranged to calculate a target current value for the generator using the generator speed and the motor speed;
- a subtractor arranged to compute a difference between the measured generator current and the target current value so as to obtain an error value;
- a generator current control unit arranged to control a current of the generator using the error value.

In an embodiment, the generator target current calculator calculates the target current value using the difference between the generator target speed and the generator speed.

In an embodiment, the calculated generator target current value (I_{Gen_target}) is actively modified by saturation to either only allow regenerative or motoring or both torque directions in the generator to influence the physical system behaviour additionally. Saturation can be achieved by limiting an output value of a PI(D) controller used arranged in the generator target current calculator.

In an embodiment, the vehicle comprises a user interface for receiving a speed related input by a user, and wherein the generator target current calculator calculates the target current value using the speed related input.

The generator target current calculator may comprise a generator target speed calculator arranged to calculate the generator target speed for the generator using the motor speed and the speed related input given by the driver.

In an embodiment, the generator target speed calculator is arranged to select a number of virtual gears, each having a fixed transmission ratio i_{Transmission} = n_{Gen}/n_{Mot}, and wherein the target speed n_{Gen_target} for the generator is determined by multiplying the measured motor speed n_{Mot} by the transmission ratio of the selected virtual gear, which is chosen manually by the driver via a human-machine interface input hmi_{Speed} or automatically determined by an algorithm based on external parameters such as vehicle speed or torque, wherein optionally gear shifts are executed using a dynamic rate limitation to ensure smooth transitions adjustable to the driver's preferences for comfort or sportiness.

In an embodiment, the generator target speed calculator is arranged to dynamically determine the generator target speed n_{Gen_target} using a continuously variable transmission (CVT) concept, wherein the driver is asked to set a desired rotational speed of the pedal crank drive via hmi_{Speed} to maintain a constant generator speed across the entire vehicle speed range. Optionally, the generator target speed n_{Gen_target} is automatically adjusted based on load and vehicle speed for optimal performance. Optionally, start-up processes from standstill are managed by defining a specific starting transmission ratio i_{Liftoff}.

In an embodiment, the control system comprises a motor target current calculator arranged to determine the target current value for the motor using the generator current, the generator speed and the motor speed.

In an embodiment, the motor target current calculator is arranged to:
(a) optionally, receive an assistance level related input from a driver;
(b) calculate the generator torque on the basis of the generator current;
(c) calculate a generator power by multiplying the generator speed by the calculated generator torque;
(d) calculate the target motor power that the drive motor should generate based on the generator power and optionally, the assistance level related input;
(e) divide the target motor power by the motor speed to obtain the target torque value for the motor;
(f) calculate the motor target current on the basis of the motor target torque.

In an embodiment, the motor target current calculator is arranged to, before the step (e), limit the value of the motor speed via saturation to only positive speed values with a positive valued lower limit (n_{Mot_low}) larger than zero. The lower limit (n_{Mot_low}) preferably lies in a range of 0 rpm < n_{Mot_low} ≤ 1 rpm, more preferably in a range of 0.0001 rpm ≤ n_{Mot_low} ≤ 0.005 rpm, and most preferably in a range of 0.0005 rpm ≤ n_{Mot_low} ≤ 0.002 rpm.

If the driver now steps onto the generator and thus generates a power larger than zero, a dividing of this power by the very small speed limit automatically leads to a very high target output torque. In this way, a start-up assistant can be implemented that automatically provides the maximum output torque in the event of a standstill or rolling backwards, even if the driver's torque is negligible in comparison.

In an embodiment, the motor target current calculator is arranged to limit a change of rate of the target motor torque. Since the value for the target motor current may reach very high values quickly, it is limited in its rate of change. This is advantageous so as to prevent the drive system from causing unpleasant acceleration jerk on the vehicle for the driver.

According to a further aspect, there is provided a method of controlling a vehicle as described above, wherein the method comprises:
- measuring a motor speed of the at least one drive motor;
- determining a target speed value for the at least one generator using the motor speed;
- controlling a speed of the at least one generator using the target speed value for the generator;
- determining a target current value for the motor depending on a dynamic power input produced by a driver when rotating the pedal crank drive, and
- controlling a current of the at least one drive motor using the target current value for the at least one drive motor.

According to a further aspect, there is provided a computer program product comprising instructions configured to, when loaded on a control system of a vehicle as described above, perform the method as described above.

### Brief description of the drawings

These and other aspects of the invention are apparent from and will be elucidated with reference to the embodiments described hereinafter. In the drawings,
Figure 1 schematically shows a vehicle according to an embodiment of the invention;
Figure 2 schematically shows the hybrid drive system of the vehicle of Figure 1 according to an embodiment;
Figure 3 schematically shows the calculation of the motor target current performed by the motor target current calculator according to an embodiment;
Figure 4A shows the vehicle speed as a function of time;
Figure 4B shows the generator speed and the generator target speed as a function of time;
Figure 4C shows the generator torque as function of time;
Figure 4D shows the generator power and the motor target power as a function of time;
Figure 4E shows the motor target torque and the rate limited motor target torque;
Figure 5A shows the vehicle speed as a function of time for another scenario;
Figure 5B shows the generator speed and the generator target speed as a function of time;
Figure 5C shows the generator torque as function of time;
Figure 5D shows the generator power and the motor target power as a function of time;
Figure 5E shows the motor target torque and the rate limited motor target torque;
Figure 6 shows a flow diagram of a method of controlling a vehicle according to an embodiment of the invention.

It should be noted that items which have the same reference numbers in different figures, have the same structural features and the same functions, or are the same signals. Where the function and/or structure of such an item has been explained, there is no necessity for repeated explanation thereof in the detailed description.

### Detailed description of embodiments

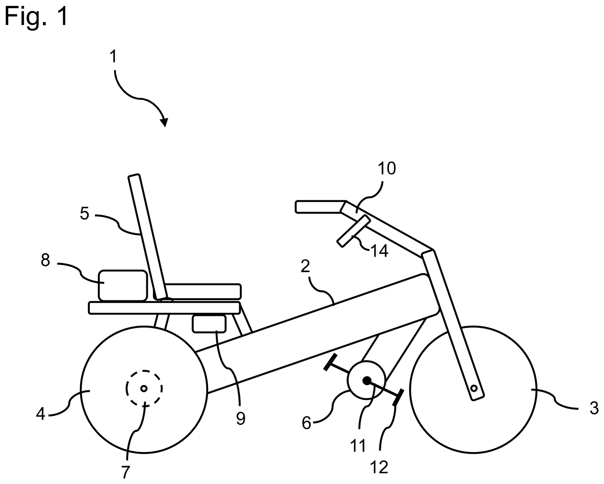

Figure 1 schematically shows a vehicle 1 according to an embodiment of the invention. In this embodiment, the vehicle 1 is a tricycle and comprises a frame 2, one front wheel 3 and two rear wheels 4 (only one of which is visible). The vehicle 1 also comprises a seat 5 for the user, also referred to as the driver or rider. The vehicle 1 comprises a serial hybrid drive system comprising at least one electric generator 6, at least one electric drive motor 7 and an energy storage device 8 for storing electric energy. The drive system of the vehicle 1 also comprises a control system 9 for controlling the electric generator 6 and the drive motor 7 as will be explained in more detail below. Figure 1 also shows handlebars 10 coupled to the front wheel 3 of the vehicle.

In this embodiment, the vehicle also comprises two pedals 12 that are coupled to the generator 6 via a crank drive 11. It is noted the crank drive 11 can be integrated with the axle of the generator 6. Alternatively, a rotation the pedals is converted to a rotation of the generator via a gear system (not shown) as will be clear to the skilled person. Once the user pushes the pedals 12 around, the generator 6 is rotated and will produce an electric current, creating energy which is stored in the energy storage device 8. The motor 7 can extract the energy from the energy storage device 8. The hybrid drive system of the vehicle 1 does not need chains, which means that this tricycle can be a chainless cycle. Figure 1 also shows a human machine interface device 14, which may be a small display, such as a touch screen mounted to the handlebar 10. The human machine interface (hmi) device 14 may be arranged to receive instructions from the user and communicate with the control system 9 by means of interchanging information, wireless, or through wires.

In an alternative embodiment, the vehicle 1 comprises two seats, and two generators, each of which are rotated by separate persons. Vehicles for more than two persons and thus more than two generators are conceivable. Also, the number of drive motors may be more than one depending on the drive system configuration.

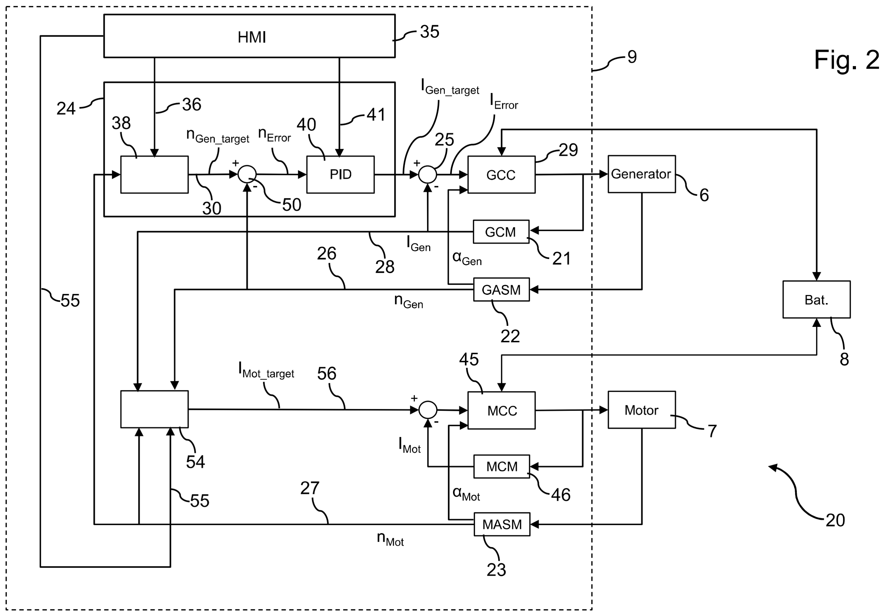

Figure 2 schematically shows the hybrid drive system 20 of the vehicle 1 of Figure 1 according to an embodiment of the invention. The drive system 20 comprises one electric generator 6 and one drive motor 7 arranged to drive the at least one of the wheels such as the rear wheels 4 shown in Figure 1. Figure 2 also shows the energy storage device 8 arranged to store electric energy generated by the electric generator 6, and the control system 9.

In this embodiment, the control system 9 comprises a generator current measurement (GCM) unit 21 for measuring a current of the generator 6. The control system 9 also comprises a generator speed measurement unit 22 for measuring an actual generator speed n_{Gen}. The control system 9 also comprises a motor speed measurement unit 23 for measuring an angular speed of a rotor of the motor 7. Both speed measurement units 22, 23 may also provide angle information, and are therefore also referred to as angle and speed measurement units GASM 22, and MASM 23 respectively.

The control system 9 is arranged to control a speed of the electric generator 6 using a target speed value n_{Gen_target} for the generator 6 which depends on the motor speed n_{Mot}. Furthermore, a target current value I_{Mot_target} for the motor 7 depends on a dynamic power input produced by a driver when rotating the crank drive. The power input of the driver P_{Driver} can be determined using the outputs of the generator current measurement unit 21 and of the generator speed measurement unit 22. The output of generator current measurement unit 21 is directly related to the torque T on the rotor of the generator 6, which torque value can be multiplied by the angular speed ω provided by the generator speed measurement unit 22, in order to come to the power P_{Gen} = T x ω.

The mechanical power that the driver feeds into the generator unit via the pedal-crank drive (P_{Driver}) is transmitted to the generator units electric machine via the optional mechanical gearbox. The mechanical power is then converted into electrical power (P_{Gen}) with the help of appropriate power electronics and regulation of the currents and voltages in the system. During the conversion, losses inevitably occur in the electrical machine itself and in the power electronics elements. Accordingly, there is an operating point-dependent deviation between driver power P_{Driver} and generator power P_{Gen}. However, this is reproducible with known losses and can be calculated, so that ultimately the generator power produced (P_{Gen}) is directly linked to the mechanical driver power input (P_{Driver}). The latter can therefore be derived from P_{Gen}.

In the embodiment of Figure 2, the control system 9 further comprises a generator target current calculator 24 arranged to calculate a target current value I_{Gen_target} for the generator using the generator speed, see arrow 26, and the motor speed n_{Mot}, see arrow 27. A subtractor 25 is arranged to compute a difference between the measured generator current I_{Gen}and the target current value I_{Gen_target} so as to obtain a first error value I_{Error}. Computing may be done by subtracting the measured generator current from the target current value. The control system 9 further comprises a generator current control unit 29 arranged to control a current of the generator 6 using the first error value I_{Error}.

The control system also comprises a target current calculator 24. This target current calculator 24 calculates the target current value I_{Gen_target} using the difference between a generator target speed n_{Gen_target}, see arrow 30, and an actual generator speed n_{Gen}, see arrow 26. The target current calculator 24 may comprise a subtractor 50 arranged to subtract the measured generator speed n_{Gen} from the target speed value n_{Gen_target} so as to obtain a second error value n_{Error}.

In the embodiment of Figure 2, the target speed value n_{Gen_target} for the generator 6 is depending on the measured motor speed n_{Mot}. This dependency may have all sorts of configurations. For example, the target generator speed value may be proportional to the motor speed.

The implementation of Figure 2 has several advantages. It does not matter in which position the pedal crank drive 11 is currently located and with how much torque the driver is currently driving it; if the generator speed exceeds the setpoint n_{Gen_target}, the value of n_{Error} will become negative and thus always creating a dynamic braking torque that reacts to it. With well-designed parameter settings, the drive system 20 can be set so rigidly that an increase in speed is no longer noticeable, as it is in the range <<1rpm.

Another advantage is that with the described control system 9, the generator 6 automatically sets a suitable braking torque. This is (offset with any gear ratio and torque losses on the mechanical path) directly proportional to the driver torque. Consequently, the driver torque in this drive system 20 can be determined completely sensorless with this control implementation. In this case, the electric machine in the generator 6 is the sensor, provided that the current-to-torque characteristics of the machine are known.

Since the generator 6 is speed-controlled, the dynamic torque generated by the driver via the pedal crank drive is kept quasi-statically in equilibrium with sufficiently fast and rigid speed control. In this way, a very natural-feeling resistance torque can be generated at the pedals for the driver, although its mechanical influence on the system cannot be predicted. At the same time, no torque sensors are required as the control can be implemented using the speed signal alone. The resulting dynamic target current value I_{Gen_target} is also directly proportional to the applied driver torque (minus any mechanical and electrical losses). This means that the proposed control system can not only generate a natural feeling of resistance, similar to a mechanical system with a chain/belt, but at the same time the driver's torque can also be measured completely without an additional sensor and solely by the generator control.

In the embodiment of Figure 2, the drive system 20 of the vehicle 1 also comprises a user interface 35 for receiving speed related input hmi_{Speed} by a user, wherein the target current calculator 24 calculates the target current value I_{Gen_target} using the received speed related input hmi_{Speed}, see arrow 36. By providing the speed related input, the driver can (but does not have to) directly influence the set speeds of the generator 6 and thus the system behaviour. For example, the generator 6 can simulate various mechanical gearshift systems and transmissions known from the state of the art. If, for example, the speed of the motor 7 (and thus the output of the vehicle) is calculated with a constant factor into the generator target speed n_{Gen_target}, the system will behave like a mechanical transmission between the driver's input on the pedals and the output on the wheel. The speed related input hmi_{Speed} could also be used by the driver to manually shift gears, for example, each of which has different factors and thus transmission ratios. This would correspond to a classic, manually shifted mechanical gearbox, whereby the number of gears and selected transmission ratios can be chosen as required. At the same time, however, the speed related input hmi_{Speed} can also be used to request that these imitated mechanical gearshift steps are automatically shifted by the system software depending on the operating point (e.g. depending on speed and load). It is also possible to omit constant proportionality ratios and instead specify a constant desired speed on the crank drive via hmi_{Speed}. Taking into account the drive-off process, e.g. with an i_{Liftoff} drive-off ratio, the speed control can then keep the crank speed constant, even if the vehicle speed changes. This corresponds to the mode of operation of a continuously variable transmission, also known as a CVT. The target speed in CVT mode does not necessarily have to be constant and can also change depending on the load and vehicle speed, for example. The modes described for selecting the target speed n_{Gen_target} are merely examples and can be combined and extended as required, whereby the driver can generally exert a direct influence on the desired system behaviour via the speed related input hmi_{Speed}.

In this embodiment, the generator target current calculator 24 further comprises a PI(D) controller 40. The PI(D) controller 40 may be a PI controller or a PID controller, i.e. also adding a differential component to the calculation for the output signal. In an embodiment, the output signal of the PI(D) controller 40 is limited to certain values, such as outputting only zero and negative values. This will result in in a system wherein the user will experience only counter torque during driving. The driver experience will then be quite similar to classical vehicles having drivetrains with chains. The limiting of the PI(D) controller output may be modifiable by a user, e.g. entering user input for specific driving modes, which are then input for the limiter inside the PI(D) controller, see arrow 41.

In the embodiment of Figure 2, the control system 9 further comprises a motor current control unit 45 arranged to control a current to the motor 7, and a motor current measurement unit 46 for measuring the current through the motor 7.

In an embodiment, the hybrid drive system 20 to be controlled comprises one or more generators and one or more drive motors. The generators and the motors are so-called electrical machines which, if necessary, are used together with a transmission system (mechanical gearbox or similar). An electric machine can always work both as a motor and as a generator, depending on the direction in which the power flows. In Figure 2, the designation has been deliberately chosen to distinguish between the subsystems. In this embodiment, the generator 6 may be directly connected to a classic crank drive, while the motor 7 acts on the vehicle's output and can therefore accelerate it. In the embodiment of Figure 2, the generator 6 and the motor 7 are AC machines. Both the generator current control unit 29, and motor current control unit 45 may comprise suitable DC/AC converters. It is noted that alternatively, one or more of the generator(s) and motor(s) operate on DC.

The vehicle 1 enables a classic driving experience for the driver acting on the crank drive in the context of the overall vehicle with this mechanical structure of a serial hybrid drivetrain, as described above, as the driver knows it from riding a regular bicycle.

In the embodiment of Figure 2, the generator 6 is speed-controlled, whereas the motor 7 is torque-controlled. Torque generation in an electrical machine is achieved via a respective current control (see generator current control unit 29, and motor current control unit 45), since the torques in an electrical machine are proportional to the applied current. This current control of the generator 6 is enabled using the generator current measurement unit 21 as well as a speed measurement unit 22 which is arranged to provide both an angle and a generator angular speed (α_{Gen} and n_{Gen}). The current control of the drive motor 7 is enabled using outputs of the motor current measurement unit 46 as well as of a speed measurement unit 23 as feedback of the control loop.

The generator 6 in Figure 2 is speed-controlled by way of arranging a further control loop for the generator 6 in order to control the speed. A dynamic target current I_{Gen_target} for current control is automatically calculated from the difference between a target speed n_{Gen_target}, see arrow 30, and a measured actual speed n_{Gen}, see arrow 26. This actual speed n_{Gen} may be calculated from the measured angle received from the GASM measurement unit 22.

It is noted that the two subsystems of generator 6 and motor 7 are controlled in harmony with each other and in the context of the overall system, so that the desired system behaviour and driving experience is generated. The target speed n_{Gen_target} for the generator 6 is calculated in a dedicated sub-function referred to as the generator target speed calculator 38. This calculator receives both the currently measured speed n_{Mot} (see arrow 27) of the motor as input for the calculations, as well as any additional hmi (human machine interface) inputs hmi_{Speed} from the driver, see arrow 36, which the driver can use to actively influence the calculations, e.g. to define desired speeds.

For the generator target speed calculator 38, there are various options for calculating a suitable target speed for the generator 6 from the inputs mentioned. The simplest, and at the same time closest to a classic mechanical bicycle drivetrain with a manual gearbox, works as follows. A virtual gearbox is parameterized, which has any number of gears with associated fixed gear ratios (iₜᵣₐₙₛₘᵢₛₛᵢₒₙ = n_{Gen}/n_{Mot}). The speed n_{Mot} measured in speed measurement unit 23, is then multiplied by the speed from the currently preselected virtual gear and its transmission ratio i_{Transmission} to obtain the generator target speed n_{Gen_target}. For example, let's assume that 'Gear 1' with i_{Transmission} = 1.5 is active. If n_{Mot} = 0rpm then n_{Gen_target} = 1.5*n_{Mot} = 0rpm. If n_{Mot} = 20rpm then n_{Gen_target} = 1.5*n_{Mot} = 30rpm. In this way, the speed of the generator 6 is calculated based on the current motor speed (which in turn is directly proportional to the vehicle speed), which in turn creates the perceptible relationship between the motor and generator for the driver. The active gear from the virtual gearbox can be selected manually by the driver via the hmi_{Speed} input, see arrow 36, or automatically by using suitable software. An algorithm can be stored via a shift point diagram, for example, which independently selects and executes appropriate shift points depending on external variables (such as vehicle speed, output torque or similar). If a gear is changed, the change in the target speed is limited by limiting the dynamic rate of change, e.g. based on time, in order to give the driver a smooth shift feeling. This can be set to be more dynamic/sporty or softer/more comfortable, depending on the driver's preference.

Alternatively, the speed of the generator in relation to the motor speed can also be set dynamically rather than in fixed proportionality steps (= constant, virtual gear ratio). A simple example of this is the programming of a CVT transmission with continuously variable transmission ratios. The driver can, for example, set a desired cadence on the pedals via hmi_{Speed}, which is always kept constant. This gives the driver the feeling that the transmission ratio is being varied continuously and without step changes, so that the driver can work at a constant generator speed over the entire speed range of the vehicle. Only the start-up process must be considered separately from the standstill, as the generator must first be brought up to the target speed. This can be done, for example, by defining a starting ratio i_{Liftoff}. The calculated generator target speed value n_{Gen_target} is then used as the basis for speed control via the PI(D) controller 40. This fulfils several essential tasks: First of all, an adequately fast and well-parameterized control enables a dynamic generation of a braking torque at the generator for the driver, so that he has the feeling of driving a real mechanical load. Due to the crank kinematics, the driver's torque is by no means constant, but rather roughly simplified sinusoidal with fully variable amplitude and speed-dependent frequency, whereby the torque oscillation has twice the frequency of the crank speed (left and right leg each generate a peak in the torque curve). In order to keep the speed constant in accordance with the target speed, for example, the speed controller must react with an equally dynamic, proportional torque. If there is a torque difference between the driver input and the generator braking torque, this would result in acceleration and the speed would change. In a perfect controller, the generator would therefore always apply exactly the driver's torque at the same time in a negative way in order to prevent a change in speed compared to the setpoint. However, as the control system only reacts and does not predict future driver behaviour, this process cannot be implemented perfectly in reality. The periodic change in the driver's torque will therefore inevitably result in a small speed deviation (n_{Error} = n_{Gen_target} - n_{Gen}), see also arrow 50. This in turn serves as an error variable in the control loop and provides the PI(D) controller 40 with the basis for determining the dynamic generator torque. Example: The target speed is 0rpm. The driver applies a torque via the crank drive, which leads to an increase in speed without resistance. This increase is proportional to the torque difference between the driver input and the generator braking torque. The greater the control error n_{Error}, the greater the calculated torque of the PI(D) controller 40 in the form of the setpoint current. If the driver torque decreases again, the speed will also decrease again. Accordingly, the controller's reaction to this deviation also decreases and the braking torque adapts dynamically. If the speed falls below the set value, the controller output becomes 0 or even changes sign. In this way, the control system 9 reacts fully dynamically to the fluctuating torque input from the driver. If the controller parameters are designed adequately and the control loop calculation is carried out at a sufficient speed, the resulting speed difference can be kept so small (e.g. <<1rpm on the crank drive) that the driver cannot feel any deviation from the target speed. In this way, the pedal can even be held quasi-statically at a standstill and prevented from rotating by the generator torque.

An advantage of this implementation is that the speed control and the resulting target currents for the generator (which in turn can be converted into the generator torque) can also be used to automatically determine the torque of the crank drive and therefore the driver. This is because, as described above, these must be the same in a state of equilibrium. Therefore, the generator torque, which reacts automatically to the driver's dynamic input torque via the control loop, can be converted directly into the driver's torque. The use of an expensive torque sensor, as used in many e-bike drive systems today, is therefore no longer necessary. And the current sensors for detecting I_{Gen} are installed anyway to control the electric machine and are always present.

In an embodiment of the invention, the output of the PI(D) speed controller is provided with an output limitation (e.g. implemented via a clamping algorithm). This has the following purpose: If the output is not limited, for example, the controller is allowed to generate both braking and driving torques at an existing setpoint speed. However, driving torques cause the generator to work as a motor and actively set the pedals in motion. Example of the effect: The vehicle is pushed externally or rolls down a hill or similar, so that the speed is > 0 km/h. This would in turn lead to a generator setpoint speed >0 rpm. If the driver is not active, the generator will still set the crank drive in motion, as this is dependent on the vehicle speed via the implemented control system. The resulting system behaviour corresponds, for example, to a chain drive that has no freewheel and can therefore drive the pedals. This is possible, but undesirable for driving comfort, as the driver can then never stop pedalling when the vehicle is coasting. However, if the output of the PI(D) controller is limited to braking currents only (e.g. limiting all positive/driving currents to 0, so that only 0 or negative currents may be output), for example, no generator torque is generated if the crank drive speed falls below the setpoint speed. This has the same physical effect as the use of a mechanical freewheel in the case described above. This guarantees that the driver is only braked at the generator, but not accelerated, and at the same time can rotate the crank drive backwards, for example, without experiencing resistance. Similarly, the crank drive is not actively set in motion via the generator when the vehicle is coasting.

It is noted that the dynamic counter/braking torque, which gives the driver the feeling of resistance, is determined and generated via the above-described speed control of the generator 6. This can now be converted into a system reaction so that the driver also has the correct feeling of influencing the output of the system. A motor target current calculator 54 is arranged for this purpose, see also Figure 2. The motor target current calculator 54 is arranged to determine a motor target current I_{Mot_target}, see arrow 56, which is input for the motor current control unit 45, after subtracting the measured motor current measured by the motor current measurement unit 46. The motor target current calculator 54 is arranged to receive the generator current I_{Gen} from the generator current measurement unit 21, and to receive the generator speed n_{Gen} from the generator speed measurement unit 22. The motor target current calculator 54 is also arranged to receive the motor speed n_{Mot} from the motor speed measurement unit 23, and to receive an assistance level related input hmi_{Torque} from a user via the user interface 35.

The motor target current calculator 54 calculates the driver torque on the basis of the generator current I_{Gen}, and then calculates the driver's power by multiplying the generator speed by the calculated driver torque. Next, the motor target current calculator 54 calculates the motor power that the drive motor should generate based on the driver's power and the assistance level. The motor power is then divided by the measured motor speed to determine the required torque of the motor, which is then converted into the required current I_{Mot_target} using the known machine characteristics of the motor 7.

In other words, the input variables of the motor target current calculator 54 are the generator current I_{Gen}, the generator speed n_{Gen} and any external driver influence variables like the assistance level related input hmi_{Torque}, see arrow 55. The driver torque is calculated on the basis of the generator current. Together with the generator speed, the driver's power (power = speed * torque) is therefore also known. Based on these known driver input variables, the power that the drive motor 7 should generate at the output is then calculated. It is noted that there are various ways of establishing the connection. The simplest is to scale the driver input with constant proportionality. In that case, the driver's power is multiplied by a factor, which in turn can be selected manually by the driver, e.g. in predefined steps. These factors could be, for example: 1, 2, 3 and 4. Here, 1 corresponds to the direct transfer of driver power to the output (P_{Mot_target} = P_{Gen} * factor), while values greater than 1 mean an increase in driver power, i.e. boosting. The energy required for this is taken from the energy generated at the generator 7, but if the power is increased, additional energy must also be taken from the energy storage device 8 (i.e. battery 8). So, the mechanical and electrical losses in the drivetrain can also be taken from the battery 8 to give the driver the feeling that the efficiency of the power transmission from the crank drive to the output is 100%. It would also be possible to set the output power lower than the driver's power (e.g. by a factor of 0.5). This would then lead to the energy storage device 8 being recharged. It would also be possible to brake by recuperation with the drive motor 7 in order to relieve the mechanical braking system and recharge the energy storage device 8 to increase system efficiency. It is noted that the assistance level can be selected not only manually by the driver (as previously described with the target speed calculation), but also, for example, by algorithms that adapt to external boundary conditions and set the support fully dynamically. Such external conditions may include, for example, gradients on the road, weather conditions, the driver's fitness level, etcetera.

As already mentioned above, the calculated target power of the drive motor 7 is converted into a target torque via the speed measured in motor speed measurement unit 23, which in turn relates to the target motor current I_{Mot_target}. When the vehicle 1 is stationary, this power-based calculation must still be modified, as the speed in this case is 0 rpm and it therefore does not make sense to divide the target power by 0 rpm. In this case, for example, the determined driver torque can be converted directly into an output torque, regardless of the speed.

The value I_{Mot_target} is thus determined in the manner described above, which then generates the drive torque in the motor current control loop. This in turn causes the vehicle 1 to accelerate (provided that the driving resistance from the gradient etc. is not too great). The acceleration of the vehicle 1 leads to a change in its speed, which in turn is used as an input variable in the calculation of the target speed for the speed control of the generator 6. This closes the overall control loop of the system between the generator 6 and motor 7, so that the driver experiences a natural driving experience in which he can directly influence the vehicle's output via the generator, while the generator generates a highly dynamic braking torque due to the speed control, which always matches the current operating point.

In an embodiment, the motor target current calculator 54 is arranged to create a special functionality referred to as the start-up assistant. For example, if the vehicle 1 is stationary or rolling slightly backwards, the determined motor speed n_{Mot} (which would be 0 rpm or negative in such a scenario) can be limited using a very small positive value (e.g. 0.0001 rpm) as a lower limit. If the driver now steps into the generator and thus generates a power larger than zero, a dividing of this power by the very small speed automatically leads to a very high calculated target output torque. In this way, a start-up assistant can be implemented that automatically provides the maximum output torque in the event of a standstill or rolling backwards, even if the driver's torque is negligible in comparison.

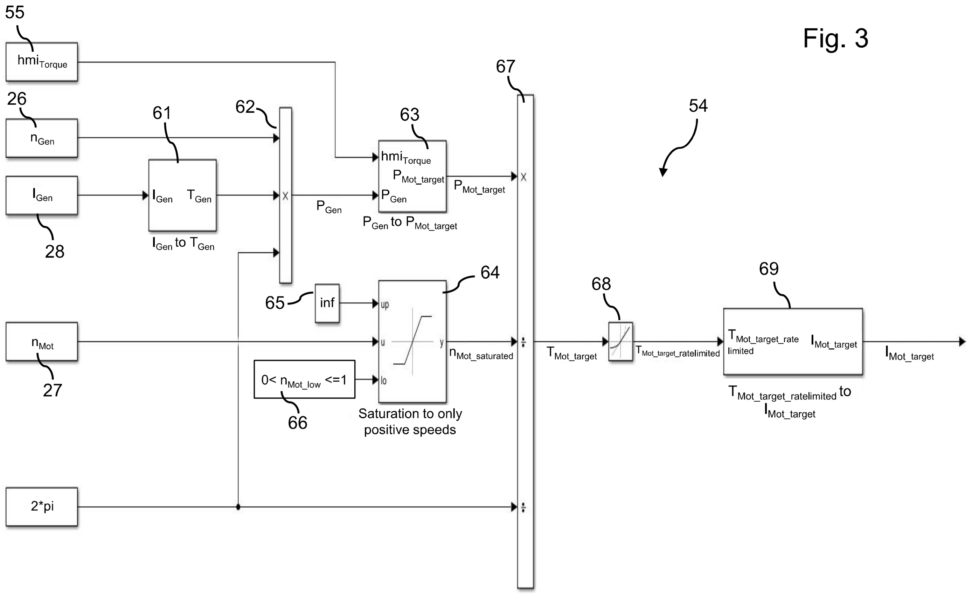

Figure 3 schematically shows the calculation of the target current I_{Mot_target} performed by the motor target current calculator 54 according to an embodiment. In this embodiment, the calculator uses three inputs being the generator speed n_{Gen} 26, the generator current I_{Gen} 28, and the motor speed n_{Mot} 27. Optionally, the assistance level related input hmi_{Torque}, see arrow 55 in Figure 2, is used as additional input. The motor target current calculator 54 in this example comprises a first converter 61 arranged to convert a value for I_{Gen} to a value for T_{Gen}. A multiplier 62 is arranged to multiply n_{Gen} by T_{Gen}, and by a factor 2*pi, to produce a value for P_{Gen}. A second convertor 63 is arranged to convert the value for P_{Gen} to a value for P_{Mot_target}. Furthermore, a saturator 64 is arranged to receive a value for n_{Mot}, which value is limited using an upper limit of infinity, see value block 65, and lower limit in the range of (0,1], see value block 66. The output of saturator 64 is called n_{Mot_saturated}, see Figure 3. A divider 67 is arranged to divide the value for P_{Mot_target} by a value for n_{Mot_saturated} and the factor 2*pi to obtain a value for T_{Mot_target}. The change in time (i.e. rate) of the value for T_{Mot_target} is limited by a rate limiter 68. The output of the rate limiter 68 is referred to as T_{Mot_target_ratelimited}. This value is input for a third converter 69 which converts the value for T_{Mot_target_ratelimited} into a value for I_{Mot_target}.

In this embodiment, the motor target current calculator 54 is arranged to execute the following steps. First, the resulting torque T_{Gen} of the generator is determined from the measured generator current I_{Gen}. This is done in by the converter 61 using the physical relationships of the electrical machine used and the mechanical gearbox used, if applicable. The generator torque T_{Gen} is then multiplied by the measured generator speed n_{Gen}, to obtain the generator power P_{Gen}. This is then converted by the second converter 63 into the target motor power P_{Mot_target} at the output of the vehicle. The conversion can be carried out in a wide variety of ways depending on the desired driving behaviour. For example, the value for P_{Mot_target} could be twice the value for P_{Gen}.

To calculate the motor current to be set via the current control at the output of the vehicle, the previously determined target power P_{Mot_target} must be converted into the target torque T_{Mot_target}. This can be done by the divider 67 dividing P_{Mot_target} by the currently measured motor speed n_{Mot} and the factor 2*pi. But, in in order to assist the driver at the start, the value for n_{Mot} is modified (i.e. limited) before this value is used for the division in the divider 67.

The motor speed n_{Mot} is limited via saturation to values that are always positive. This means that there is no upper limit (indicated by inf = infinity), but at least a very small, positive speed is always output at the lower end, even if the real speed is zero or negative. This has the following effect: Dividing the motor power P_{Mot_target} by the limited motor speed n_{Mot_saturated} will therefore always result in a positive target torque T_{Mot_target} if P_{Mot_target} is positive. In this context, a target speed of >= 0 rpm is always specified on the generator in the speed control, even if the vehicle 1 is stationary or even rolling backwards (v <= 0 km/h in this case). And by setting the lower saturation limit to a very low speed, a very high torque is always calculated in this case, even if the driver does not apply such a high torque to the generator 6.

To prevent the described saturation method from causing unpleasant acceleration jerk on the vehicle 1, the value for T_{Mot_target} can be limited, e.g. by limiting the maximum rate of change per time, see rate limiter 68. Finally, the calculated target torque T_{Mot_target} is converted by the third converter 69 into a corresponding target current I_{Mot_target} (which is again machine-dependent, see conversion I_{Gen} to T_{Gen}). Preferably, a corresponding limitation of the maximum currents will also be provided here so that the calculation of the set torques described above does not exceed the physical limits of the drive system 20.

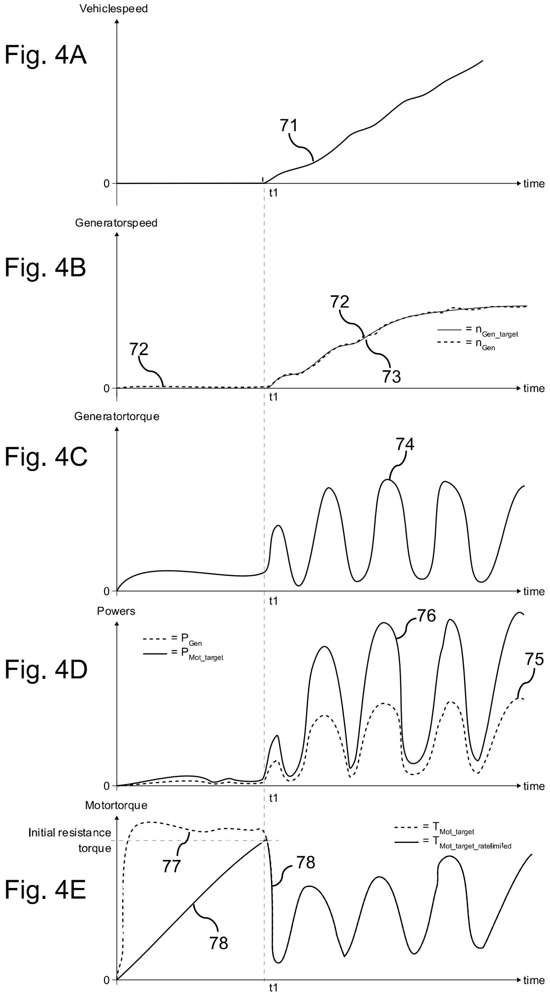

Below, two possible scenarios are described in which the start-up assistant would come into play. The first scenario is described with reference to Figures 4A-4E. Figure 4A shows the vehicle speed as a function of time, see also line 71. Figure 4B shows the generator speed (line 72) and the generator target speed (line 73) as a function of time. Figure 4C shows the generator torque as function of time, see line 74. Figure 4D shows the generator power (line 75) and the motor target power (line 76) as a function of time. Figure 4E shows the motor target torque (line 77) and the rate limited motor target torque (line 78).

At t=0, the vehicle 1 is stationary (v = 0 km/h → n_{Mot} = 0rpm). The driver of the system now wants to start driving and begins to exert force on the crank drive. The generator 6 attempts to regulate a speed of 0 rpm or slightly higher. Due to the torque input from the driver, the generator speed n_{Gen} (line 72) will not be exactly 0 rpm, even if it is very close to 0 rpm. Together with the torque T_{Gen} resulting from the generator current, the driver therefore exerts a power P_{Gen} that is larger than 0 W, even if it is negligible. If this power (calculated into a target power P_{Mot_target}) were now divided by the motor speed of exactly 0 rpm, the result would not be valid. However, if the speed value of 0 rpm is limited to a very small positive value as described (e.g. 0.0001rpm), then dividing by this speed inevitably leads to a very high target torque T_{Mot_target}. Significance for the driver: If the driver attempts to drive off, but their own power and strength are not sufficient to overcome the initial driving resistance to drive off, the highest torque that the vehicle's drive system can deliver is automatically output in this case. Even with very little mechanical input from the driver, it will therefore be possible to achieve maximum output torque. As the target motor torque T_{Mot_target}, see line 77 in Figure 4E, reaches very high values very quickly in this way, it is limited in its rate of change. This results in the line 78 showing the rate limited motor target torque T_{Mot_target_ratelimited}. At time t1 the resulting motor torque is then sufficient to overcome the initial driving resistance at the output. The vehicle 1 accelerates and thus becomes faster than 0 km/h. At this point, the saturation of the motor speed n_{Mot} in the target output torque calculation is exited again and the regular, power-based calculation of the motor torque comes into effect again. Please note that instead of a lower limit of 0.0001 rpm for the saturator 64 other small values could be used here. In an embodiment, the lower limit n_{Mot_low} lies in a range of 0 rpm < n_{Mot_low} ≤ 1 rpm, preferably in a range of 0.0001 rpm ≤ n_{Mot_low} ≤ 0.005 rpm, and more preferably in a range of 0.0005 rpm ≤ n_{Mot_low} ≤ 0.002 rpm.

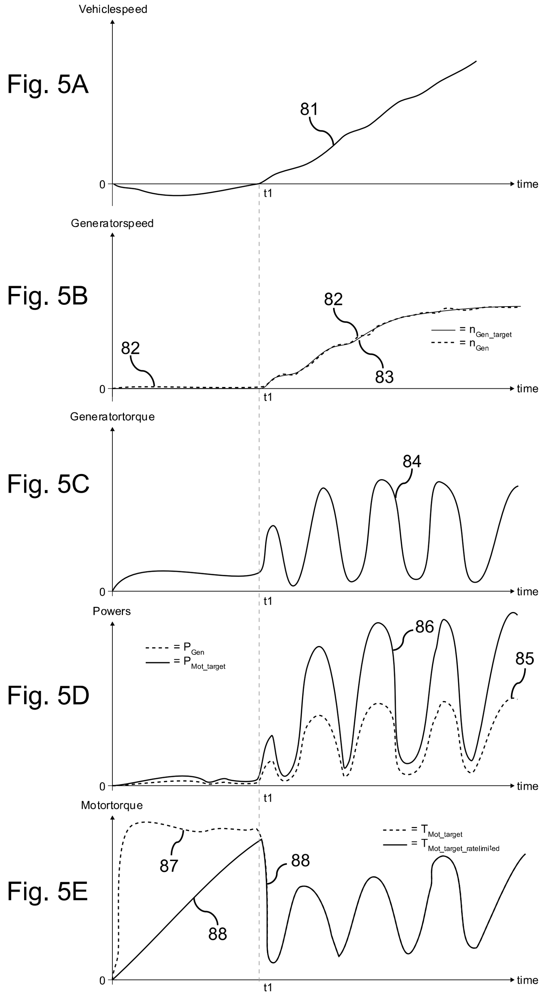

The second scenario is described with reference to Figures 5A-5E. Figure 5A shows the vehicle speed as a function of time, see also line 81. Figure 5B shows the generator speed (line 82) and the generator target speed (line 83) as a function of time. Figure 5C shows the generator torque as function of time, see line 84. Figure 5D shows the generator power (line 85) and the motor target power (line 86) as a function of time. Figure 5E shows the motor target torque (line 87) and the rate limited motor target torque (line 88).

This scenario is initially very similar to the first scenario, with one main difference: The vehicle 1 starts, for example, on an incline or similar, so that the vehicle 1 starts to roll backwards due to the driving resistance. This can be recognized by the fact that the vehicle speed (and therefore also n_{Mot} 81) is initially slightly negative. In this case too, the driver now exerts a small positive torque on the generator. The speed control keeps the speed at values very close to, but slightly above 0 rpm. The resulting positive power P_{Gen} is converted into an equally positive target power at the motor of P_{Mot_target}. This is again offset against the limited motor speed n_{Mot} of e.g. 0.0001 rpm, as the real measured value is < 0 rpm. As a result, the driver's performance on the motor is again greatly magnified. The greater the rate-limited motor torque becomes, the less the change in speed becomes negative, until it finally accelerates again and returns to positive speed at the time marked with a dashed line. Thus, in this case too, the described implementation of the start-up assistant could contribute to enabling easy start-up, e.g. on a hill, with little mechanical effort on the part of the driver.

In summary, the implementation of the motor target current calculator 54 shown in Figure 3, based on a serial hybrid system as described in Figure 2, enables a simple and at the same time very effective implementation of a start-up assistant with the help of the power-based output torque calculation and an intelligent virtual limitation of the motor speed n_{Mot}, which allows the respective driver to set the vehicle in motion in driving situations with a high output torque requirement even with the smallest mechanical contribution.

It is noted that many speeds and torques described above can also be offset against corresponding mechanical ratios, depending on the system design. For example, the generator 6 is usually a small electrical machine that can rotate very quickly but can only generate limited torque. A human being, on the other hand, can generate considerably more torque via a crank drive, but cannot rotate it as quickly. Gearboxes with constant characteristic conversion ratios may be used to adapt these different characteristics. The speeds (e.g. n_{Mot}, n_{Gen}) shown in Figure 4A, 4B, 5A and 5B and the torques present in the drive system 20 may therefore have to be offset against these ratios.

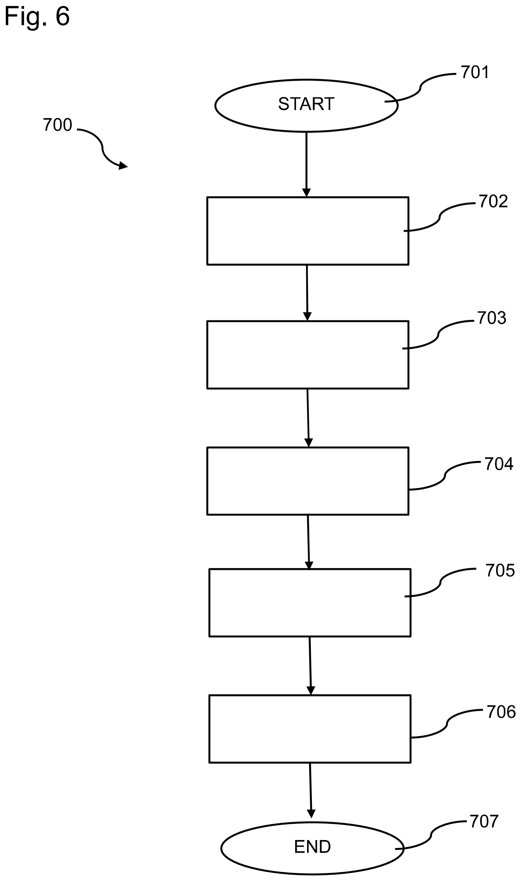

Figure 6 shows a flow diagram 700 of a method of controlling a vehicle as described above. Following a start 701, the method comprises a step 702 in which a motor speed n_{Mot} of the at least one drive motor 7 is measured. In a next step 703, a target speed value n_{Gen_target} for the at least one generator 6 is determined using the motor speed n_{Mot}. Next in a step 704, a speed of the at least one generator 6 is controlled using the target speed value for the generator. Then, a target current value I_{Mot_target} for the motor 7 is determined depending on a dynamic power input produced by a driver when rotating the crank drive, see step 705. And in a step 706, a current of the at least one drive motor 7 is controlled using the target current value I_{Mot_target} for the at least one drive motor 7. The method also comprises an end step 707. After the end 707, the steps can be repeated using a frequency that depends on processing speed, user input and/or algorithm variables.

The control system 9 described above with reference to Figure 2, may comprise one or more processing units to load specific software for performing the method of Figure 6. The software may be embodied by a computer program product configured to perform the functions and steps of at least some of the units of the control system 9. Some of the units, such as the measurement units 21, 22, 23, 46 may completely or partly be implemented in hardware, while other units, like units 35, 45 and 54 may be implemented fully in software, as will be appreciated by the skilled person.

With the proposed control system 9, the generator 6 automatically sets a suitable braking torque. This is (offset with any gear ratio and torque losses on the mechanical path) directly proportional to the driver torque. Consequently, the driver torque in such a system can be determined completely sensorless with this control implementation. In this case, the electric machine in the generator 6 is the sensor, provided that the current-to-torque characteristics of the machine are known. Furthermore, a corresponding target specification for the torque-controlled drive(s) can then be calculated using the known mechanical input from the driver (speed and torque). For example, the measured driver torque can be translated 1:1 to the drive. This in turn leads to an acceleration of the vehicle if the driving resistance is not too great. This changes the speed and, as a result, the target speed for the generator.

The present invention has been described above with reference to a number of exemplary embodiments as shown in the drawings. Modifications and alternative implementations of some parts or elements are possible as long as they are included in the scope of protection as defined in the appended claims. It should be noted that the above-mentioned embodiments illustrate rather than limit the invention, and that those skilled in the art will be able to design many alternative embodiments within the scope of protection as defined in the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

## Claims

1. A vehicle (1), such as a bicycle or tricycle, comprising at least two wheels (3,4) and a hybrid drive system (20) for driving at least one of the wheels, wherein the hybrid drive system (20) comprises:
- at least one electrical generator (6) comprising a generator axle;
- a pedal crank drive (11) coupled to the generator axle;
- at least one electrical drive motor (7) arranged to drive the at least one of the wheels;
- an energy storage device (8) arranged to store electric energy generated by the at least one electrical generator, and to supply energy to the at least one electrical drive motor (7);
- a control system (9) comprising a motor speed measurement unit (23) for measuring a motor speed (n_{Mot}) of the at least one electrical drive motor (7), the control system (9) being arranged to:
- control a speed of the at least one electric generator (6) using a target speed value for the generator (n_{Gen_target}) which depends on the motor speed (n_{Mot}), and
- control a current of the electrical drive motor, using a target current value for the motor (I_{Mot_target}) which depends on a dynamic power input produced by a driver when rotating the pedal crank drive.

2. The vehicle according to claim 1, wherein the control system (9) comprises:
- a generator current measurement unit (21) for measuring a generator current (I_{Gen}) of the at least one generator (6);
- a generator speed measurement unit (22) for measuring a generator speed (n_{Gen}) of the generator (6),
wherein the control system is arranged to determine the dynamic power input produced by the driver using the generator current (I_{Gen}) and the generator speed (n_{Gen}).

3. The vehicle according to claim 2, wherein the control system (9) further comprises:
- a generator target current calculator (24) arranged to calculate a target current value (I_{Gen_target}) for the generator (6) using the generator speed (n_{Gen}) and the motor speed (n_{Mot});
- a subtractor (25) arranged to compute a difference between the measured generator current (I_{Gen}) and the target current value (I_{Gen_target}) so as to obtain an error value (I_{Error});
- a generator current control unit (29) arranged to control a current of the generator (6) using the error value (I_{Error}).

4. The vehicle according to claim 3, wherein the generator target current calculator (24) calculates the target current value (I_{Gen_target}) using the difference between the target speed value for the generator (n_{Gen_target}) and the generator speed (n_{Gen}).

5. The vehicle according to claim 3 or 4, wherein the calculated generator target current value (I_{Gen_target}) is actively modified by saturation to either only allow regenerative or motoring or both torque directions in the generator to influence the physical system behaviour additionally.

6. The vehicle according to any one of claims 3 - 5, wherein the vehicle comprises a user interface (35) for receiving a speed related input (hmi_{Speed}) by the driver, and wherein the generator target current calculator (24) calculates the target current value for the generator (I_{Gen_target}) using the speed related input (hmi_{Speed}).

7. The vehicle according to claim 6, wherein the generator target current calculator (24) comprises a generator target speed calculator (38) arranged to calculate the target speed value for the generator (n_{Gen_target}) using the motor speed (n_{Mot}) and the speed related input (hm_{iSpeed}) given by the driver.

8. The vehicle according to claim 7, wherein the generator target speed calculator (38) is arranged to select a number of virtual gears, each having a fixed transmission ratio i_{Transmission} = n_{Gen}/n_{Mot}, and wherein the target speed n_{Gen_target} for the generator is determined by multiplying the measured motor speed n_{Mot} by the transmission ratio of the selected virtual gear, which is chosen manually by the driver via a human-machine interface input hmi_{Speed} or automatically determined by an algorithm based on external parameters such as vehicle speed or torque, wherein optionally gear shifts are executed using a dynamic rate limitation to ensure smooth transitions adjustable to the driver's preferences for comfort or sportiness.

9. The vehicle according to claim 7, wherein the generator target speed calculator (38) is arranged to dynamically determine the generator target speed n_{Gen_target} using a continuously variable transmission (CVT) concept, wherein the driver is asked to set a desired rotational speed of the pedal crank drive (11) via hmi_{Speed} to maintain a constant generator speed across the entire vehicle speed range, wherein optionally the generator target speed n_{Gen_target} is automatically adjusted based on load and vehicle speed for optimal performance, and wherein optionally, start-up processes from standstill are managed by defining a specific starting transmission ratio i_{Liftoff}.

10. The vehicle according to any of claims 2-9, wherein the control system (9) comprises a motor target current calculator (54) is arranged to determine the target current value (I_{Mot_target}) for the motor using the generator current (I_{Gen}), the generator speed (n_{Gen}) and the motor speed (n_{Mot}).

11. The vehicle according to claim 10, wherein the motor target current calculator (54) is arranged to:
(a) optionally, receive an assistance level related input (hmi_{Torque}) from a driver;
(b) calculate the generator torque on the basis of the generator current (I_{Gen});
(c) calculate a generator power (P_{Gen}) by multiplying the generator speed (n_{Gen}) by the calculated generator torque (T_{Gen});
(d) calculate the target motor power (P_{Mot__target}) that the drive motor should generate based on the generator power (P_{Gen}) and optionally, the assistance level related input (hmi_{Torque});
(e) divide the target motor power (P_{Mot_target}) by the motor speed (n_{Mot}) to obtain the target torque value for the motor (T_{Mot_target});
(f) calculate the motor target current (I_{Mot_target}) on the basis of the motor target torque (T_{Mot_target}).

12. The vehicle according to claim 11, wherein the motor target current calculator (54) is arranged to, before the step (e), limit the value of the motor speed (n_{Mot}) via saturation to only positive speed values with a positive valued lower limit (n_{Mot_low}) larger than zero, and wherein preferably the lower limit (n_{Mot_low}) lies in a range of 0 rpm < n_{Mot_low} ≤ 1 rpm, more preferably in a range of 0.0001 rpm ≤ n_{Mot_low} ≤ 0.005 rpm, and most preferably in a range of 0.0005 rpm ≤ n_{Mot_low} ≤ 0.002 rpm.

13. The vehicle according to any of claims 11-12, wherein the motor target current calculator (54) is arranged to limit a change of rate of the target motor torque (T_{mot_target}).

14. A method of controlling a vehicle according to any of the preceding claims, wherein the method comprises:
- measuring a motor speed (nₘₒₜ) of the at least one drive motor (7);
- determining a target speed value (n_{gen_target}) for the at least one generator (6) using the motor speed (nₘₒₜ);
- controlling a speed of the at least one generator (6) using the target speed value for the generator;
- determining a target current value (I_{mot_target}) for the motor (7) depending on a dynamic power input produced by a driver when rotating the pedal crank drive, and
- controlling a current of the at least one drive motor (7) using the target current value (I_{mot_target}) for the at least one drive motor (7).

15. A computer program product comprising instructions configured to, when loaded on a control system of a vehicle according to any one of the claims 1-13, perform the method of claim 14.
